# EUROPEAN PATENT APPLICATION

(11) **EP 1 473 583 A1**
(43) Date of publication of application: **03.11.2004**
(21) Application number: 04008728.0
(22) Date of filing: 13.04.2004
(51) Int. Cl.: G02C 1/02

(54) **Connecting device of the screw-and-nut type**

(30) Priority: 30.04.2003 IT PD20030087
(71) Applicant: SILCON PLASTIC S.r.l., 32012 Forno di Zoldo (Belluno) (IT)
(72) Inventor: Costantin, Arcangelo, 32012 Forno di Zoldo (Prov. of Belluno) (IT); Battistin, Pietro, 32012 Forno di Zoldo (Prov. of Belluno) (IT)
(74) Representative: Modiano, Guido, Dr.-Ing.

(57) **Abstract**

A connecting device of the screw-and-nut type, comprising a block (11) with a nut thread, which is associated with a first element (13) and is suitable to be arranged in a through hole (14) provided on at least one second element (15) suitable to be fixed to the first element (13), and a threaded element (16), which is suitable to engage in the block (11) in order to lock the first element (13) to the at least one second element (15). The nut thread is constituted substantially by a cylindrical sector of thread (17) that opens onto the through hole (14). The threaded element therefore engages the cylindrical sector of thread (17) and the internal surface portion (18) of the through hole (14) that lies opposite the cylindrical sector of thread (17). The components described here of such a device can all be obtained easily by casting.

## Description

The present invention relates to a connecting device of the screw-and-nut type.

Connecting devices of the screw-and-nut type are in everyday use for many applications in a very wide range of fields.

These fields of application include in particular the mutual coupling of parts of eyeglasses, such as for example the fixing of lenses to corresponding temples and/or nosepieces, or the mutual connection of portions of modular box-like containers.

These devices are often obtained conveniently by casting.

However, the casting of these devices is not free from drawbacks.

The main drawback is linked to the casting of the nut portion.

In order to obtain a nut by casting, it is necessary to adopt a die with a carriage that performs a rotary and translational motion suitable to form said nut.

The costs of a carriage that performs a rotary and translational motion are considerable, both in terms of management of the sequence of operations required to perform casting and from the point of view of machine times, which are inevitably extended by the operation for extracting said rotary and translational carriage.

The aim of the present invention is to provide a connecting device of the screw-and-nut type that can be obtained easily and rapidly by casting.

Within this aim, an object of the present invention is to provide a device that is much cheaper than conventional devices.

Another object of the present invention is to provide a device that is suitable for a wide range of applications.

Another object of the present invention is to provide a connecting device whose strength characteristics are at least equal to those of conventional devices.

Another object of the present invention is to provide a connecting device that is extremely easy to assemble even for a user who lacks any prior experience.

Another object of the present invention is to provide a connecting device of the screw-and-nut type that can be manufactured with known equipment and technologies.

This aim and these and other objects that will become better apparent hereinafter are achieved by a connecting device of the screw-and-nut type, comprising a block with a nut thread, which is associated with a first element and is suitable to be arranged in a through hole provided on at least one second element suitable to be fixed to said first element, and a threaded element, which is suitable to engage in said nut thread block in order to lock said first element to said at least one second element, said device being characterized in that said nut thread is constituted substantially by a cylindrical sector of thread that opens onto said through hole, said threaded element being suitable to engage said cylindrical sector of thread and the internal surface portion of said through hole that lies opposite said cylindrical sector of thread.

Further characteristics and advantages of the present invention will become better apparent from the following detailed description of a preferred but not exclusive embodiment thereof, illustrated by way of nonlimiting example in the accompanying drawings, wherein:

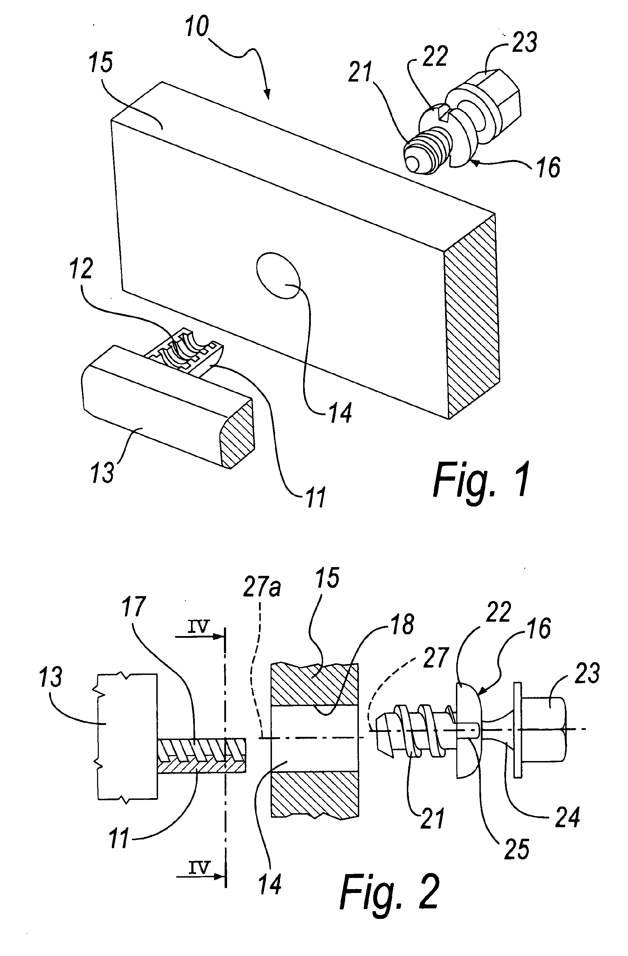

Figure 1 is an exploded perspective view of a connecting device according to the invention;
Figure 2 is a partially sectional exploded side view of a device according to the invention;
Figure 3 is a partially sectional side view of the device according to the invention;
Figure 4 is a transverse sectional view, taken along the line IV-IV shown in Figure 2;
Figure 5 is a partially sectional side view of the invention in the final configuration;
Figure 6 is a view of an example of application of a connecting device according to the invention.

With reference to the figures, a connecting device of the screw-and-nut type according to the invention is generally designated by the reference numeral 10.

The device 10 comprises a block 11 with a nut thread 12, which is associated with a first element 13 and is suitable to be arranged in a through hole 14 provided in a second element 15.

The second element 15 is fixed to the first element 13.

There is also a threaded element 16, which engages in the nut thread block 11 in order to lock the first element 13 to the second element 15.

The device 10 is characterized in that the nut thread 12 is substantially constituted by a cylindrical sector of thread 17 that opens onto the through hole 14.

The threaded element 16 engages the cylindrical sector of thread 17 and the internal surface portion 18 of the through hole 14 that lies opposite the cylindrical sector of thread 17.

In the example considered, the internal center angle 19 of the transverse cross-section of the cylindrical sector of thread 17 is conveniently 180°.

Advantageously, the block 11 is monolithic with the first element 13 and both are therefore obtained conveniently with a single die.

The threaded element 16 is constituted by a stem 21 that is provided with a first retention head 22 that is adjacent to it and with a second tightening head 23.

The first head 22 and the second head 23 are connected by a stem 24.

The stem 24 is long enough to allow correct grip of the second fastening head 23 by a corresponding screwing tool, without said tool damaging in any way the surface of the second element 15.

The stem 24 breaks, generally by torsion, upon completion of the screwing of the threaded element 16 into the corresponding seat, which as mentioned is composed of the threaded cylindrical sector 17 and the opposite internal surface portion 18.

When the connecting device 10 is used to fix components that have a significant aesthetic content, as in the case of eyeglasses in which the nosepiece and/or the temples are fixed to the lenses by way of a device 10 according to the invention, it is convenient to make the device 10 as scarcely visible as possible, so as to avoid compromising the quality of the design of the product with which it is associated.

The stem 24 therefore allows to remove rapidly the second tightening head 23 when it has performed its tasks, allowing correct and rapid screwing of the threaded element 16.

The first retention head 22 is provided perimetrically with at least two slots 25 for emergency unscrewing of the threaded element 16.

It may in fact be necessary to remove the connecting device 10, but as mentioned one can no longer count on the second head 23.

The slots 25 allow suitable instruments to perform the grip required to remove the device 10.

The at least two slots 25 are, in the example described here, constituted by two radial recesses 26 that pass through in an axial direction and are symmetrical with respect to the longitudinal axis of symmetry 27 of the threaded element 16.

The stem 21 and the corresponding cylindrical sector 17 have a square thread.

This facilitates the contact and therefore the grip of the thread of the stem 21 on the portion of internal surface 18 of the hole 14.

In the example described here, the block 11 is a half cylinder.

The cylindrical sector of thread 17 is arranged on the semicylindrical block 11 so that its axis lies on the longitudinal plane of symmetry of the block 11, parallel to the longitudinal axis of the semicylindrical block 11.

Therefore, the longitudinal axis 27a of the hole 14 and the longitudinal axis 27 of the threaded element 16 do not coincide.

Conveniently, the threaded element 16, as well as the first element 13 with the associated block 11 provided with said cylindrical sector of thread 17, are obtained by casting.

The use of a center angle of more than 180° for the cylindrical sector of thread 17 would make it necessary, once again and disadvantageously, to resort to a carriage for the die.

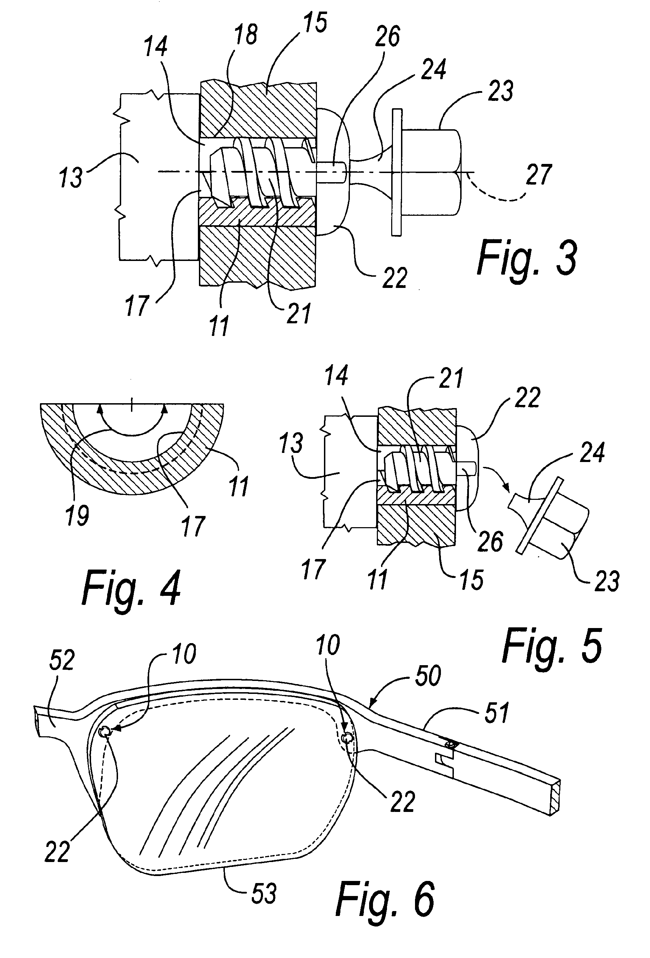

Figure 6 illustrates a lens 53 that is fixed to a frame 50 both at the region of the nosepiece 52 and at the region of the temple 51 by way of devices 10 according to the invention.

The only visible part of the device 10 is the first head 22 of the threaded element 16.

In practice it has been found that the device thus described solves the problems noted in known types of screw-and-nut connecting device.

In particular, the present invention provides a low-cost connecting device that does not require particularly complex and onerous dies.

Moreover, the present invention provides a device that by way of said second tightening head allows to screw in the best possible manner the threaded element to the corresponding nut even in the presence of a device according to the invention that is particularly small, as in the cited case in which said device is used to lock lenses of eyeglasses to the respective nosepiece and temples.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2003A000087 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A connecting device of the screw-and-nut type, comprising a block (11) with a nut thread (12), which is associated with a first element (13) and is suitable to be arranged in a through hole (14) provided on at least one second element (15) suitable to be fixed to said first element (13), and a threaded element (16), which is suitable to engage in said block (11) in order to lock said first element (13) to said at least one second element (15), said device (10) being **characterized in that** said nut thread (12) is constituted substantially by a cylindrical sector of thread (17) that opens onto said through hole (14), said threaded element being suitable to engage said cylindrical sector of thread (17) and the internal surface portion (18) of said through hole (14) that lies opposite said cylindrical sector of thread (17).

2. The device according to claim 1, **characterized in that** the internal center angle (19) of the transverse cross-section of said cylindrical sector of thread (17) is 180°.

3. The device according to claim 1, **characterized in that** said block (11) is monolithic with said first element (13).

4. The device according to claim 1, **characterized in that** said threaded element (16) is constituted by a stem (21) provided with a first retention head (22) that is adjacent to it and with a second tightening head (23), said first and second heads (22, 23) being connected by a stem (24) that is suitable to break upon completion of the screwing operation.

5. The device according to claim 4, **characterized in that** said first sealing head (22) is provided perimetrically with at least two slots (25) for emergency unscrewing of said threaded element (16).

6. The device according to claim 5, **characterized in that** said at least two slots (25) are constituted by two radial recesses (26) that pass through in an axial direction and are symmetrical with respect to the longitudinal axis of symmetry (27) of said threaded element (16).

7. The device according to one or more of the preceding claims, **characterized in that** said stem (21) and said corresponding cylindrical sector (17) have a square thread.

8. The device according to one or more of the preceding claims, **characterized in that** said block (11) is a half cylinder on which said cylindrical sector of thread (17) is arranged so that its axis lies on the longitudinal plane of symmetry of said block (11) and parallel to the longitudinal axis of said semicylindrical block (11).

9. The device according to one or more of the preceding claims, **characterized in that** said threaded element (16) and said first element (13) with the associated block (11) provided with said cylindrical sector of thread (17) are obtained by casting.
